# EUROPEAN PATENT SPECIFICATION

(11) **EP 1 575 209 B1**
(45) Date of publication and mention of the grant of the patent: **03.12.2014**
(21) Application number: 05002422.3
(22) Date of filing: 04.02.2005
(51) Int. Cl.: H04L 9/06

(54) **Cryptographic device and associated method**
Kryptografische Vorrichtung und Verfahren
Dispositif cryptographique et procédé associé

(30) Priority: 18.02.2004 US 780848
(43) Date of publication of application: 14.09.2005
(73) Proprietor: HARRIS CORPORATION, Melbourne, FL 32919 (US)
(72) Inventor: Kurdziel, Michael T., Rochester, NY 14624 (US); Dennis, Gary Roger, Rochester, NY 14616 (US)
(74) Representative: Schmidt, Steffen J.

(56) References cited:
- DAEMEN J; KNUDSEN L R; RUMEN V: "Linear frameworks for block ciphers" DESIGNS, CODES AND CRYPTOGRAPHY. KLUWER ACADEMIC PUBLISHERS, vol. 22, no. 1, January 2001 (2001-01), pages 65-87, XP002322522 NETHERLANDS ISSN: 0925-1022
- BIRYUKOV A; SHAMIR A: "Structural cryptanalysis of SASAS" ADVANCES IN CRYPTOLOGY - EUROCRYPT 2001. PROCEEDINGS. SPRINGER-VERLAG, LECTURE NOTES IN COMPUTER SCIENCE, vol. 2045, 10 May 2001 (2001-05-10), pages 394-405, XP002322523 INNSBRUCK, AUSTRIA ISBN: 3-540-42070-3
- BAODIAN W, DONGSU L, WENPING M, XINMEI W: "Property of finite fields and its cryptography application" ELECTRONICS LETTERS, IEE STEVENAGE, GB, vol. 39, no. 8, 17 April 2003 (2003-04-17), pages 655-656, XP006020175 ISSN: 0013-5194

## Description

### Background of the Invention

The new advanced encryption standard (AES) algorithm was designed for commercial applications. As per its original specification, the AES algorithm runs efficiently in both hardware and software. This requirement not only increases the probability of a software-based brute force success, but also imposes a mathematical structure that may shrink the search space of the attack.

AES was formerly known as Rijndael and is the U.S. Government's new type-3 algorithm. The algorithm is cryptographically strong, and is efficient in both hardware and software embodiments. The algorithm features a scalable key length. This attribute, together with other advantages, ensures that the AES algorithm will be effective for commercial applications for many years.

A complete description of the AES algorithm can be found in the Federal Information Processing Standard (FIPS-197). For the AES algorithm to run efficiently in software, it was constructed with multiple rounds (or loops) of arithmetic functions that operate on byte-sized or 32 bit word-sized variables over GF(2⁸) and GF(2). Operations over these two Galois Fields results in algorithm behavior that is highly non-linear. Each round includes a substitution operation, a row shift operation, a column mixing operation, and an addition operation for combining a sub-key variable addition operation.

The substitution operation includes a non-linear byte substitution that operates independently on each byte of the 128 bit input to this stage. The substitution includes a series of linear operations over both GF(2⁸) and GF(2). The relationship between operations over these two fields results in an overall mapping that is non-linear. This property provides strength against linear and differential cryptanalysis.

Following the substitution operation is a straightforward row-wise byte shifting operation. Next, a column-wise polynomial transformation is applied if a count indicates that the total number of rounds has not been completed yet. The transformation includes a third order polynomial multiplication over GF(2⁸). The row shifting and column transformation operations provide mixing or diffusion layers to the algorithm. Finally, a key variable addition operation is performed. This operation is a straightforward modulo-two addition of an input variable with the appropriate sub-key variable over GF(2).

The row shifting and column transformation operations provide layers of diffusion for the AES algorithm. However, there is no redundancy in the AES diffusion layers. The algorithm's cryptographic strength depends on the mixing offered by the diffusion layer operations working together over multiple rounds. If an attack is identified that eliminates the contribution of any of these operations, the overall cryptographic strength of the algorithm will be compromised.

Document XP002322522 provides a discussion of linear components in cipher structures, their interactions and their role in providing resistance against differential and linear cryptanalysis. Document D1 discloses cipher structures that are similar to the classical Substitution-Permutation structure. The teaching disclosed therein is to use more general linear transformations instead of permutations. The objective of this document is to demonstrate that resistance against linear and differential cryptanalysis can be efficiently obtained by combining linear components with non-linear components. A block cipher disclosed therein consists of two rounds. Every round consists of the application of substitutions and the mixing transformation. The substitutions provide the non-linearity of the cipher. The input block is divided into smaller blocks, which are transformed by an S-box. The mixing transformations connect the outputs of the S-boxes in one round with the inputs of the S-boxes in the next round. The mixing transformations can be linear or nonlinear. The example of a mixing permutation provided therein is a bit permutation, where the bits of the input are simply reordered but left otherwise unchanged.

Document XP002322523 provides a discussion of a structural attack at a block cipher having five layer scheme with 128 bit plaintexts and 8 bit S-boxes. While discussing attacking said block cipher is the main object of D2, it provides a brief discussion of the block cipher, comprising the five layer scheme in which each 5 layer contains k invertible S-boxes which map m bits to m bits, and each A layer contains an invertible affine mapping.

Document XP006020175 discloses a study of the resistance of the block cipher against the interpolation attacks. In relation to this, an implementation of S-boxes is proposed with a property of finite fields, so that the coordinates of the finite field element are expressed by algebraic polynomials with the element itself as the variable. This property is used lo determine the algebraic expression of the Rijndael S-box.

### Summary of the Invention

In view of the foregoing background, it is therefore an object of the present invention to enhance the cryptographic strength of a cryptographic algorithm, such as the advanced encryption standard (AES) algorithm, for example.

This and other objects, features and advantages in accordance with the present invention are accomplished in the manner defined by the appended claims.

### Brief Description of the Drawings

FIG. 1 is a block diagram of a communication system including a key scheduler and a cryptographic device in accordance with the present invention.
FIG. 2 is detailed block diagram of the cryptographic device as shown in FIG. 1.

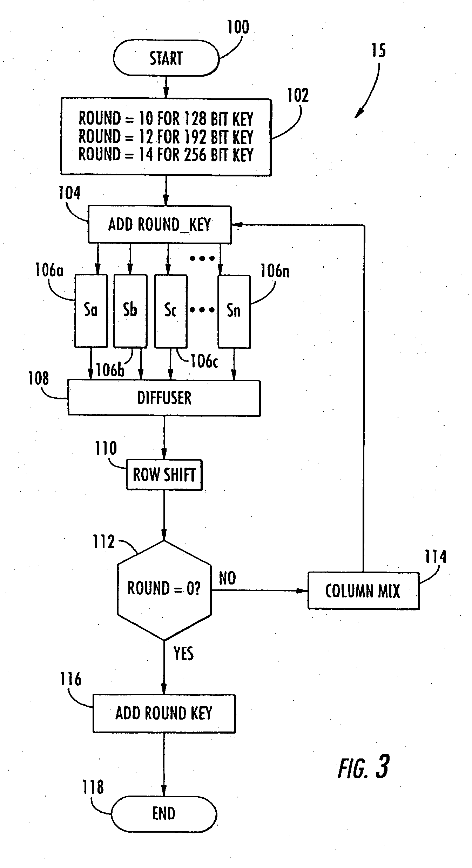

FIG. 3 is flowchart of the cryptographic algorithm being executed by the cryptographic device as shown in FIG. 1.
FIG. 4 is one embodiment of the diffuser as shown in FIG. 2.
FIG. 5 is a second embodiment of the diffuser as shown in FIG. 2.
FIG. 6 is a third embodiment of the diffuser as shown in FIG. 2.
FIG. 7 is a method for converting an input data block into an output data block for a cryptographic device in accordance with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime and double prime notations are used to indicate similar elements in alternative embodiments.

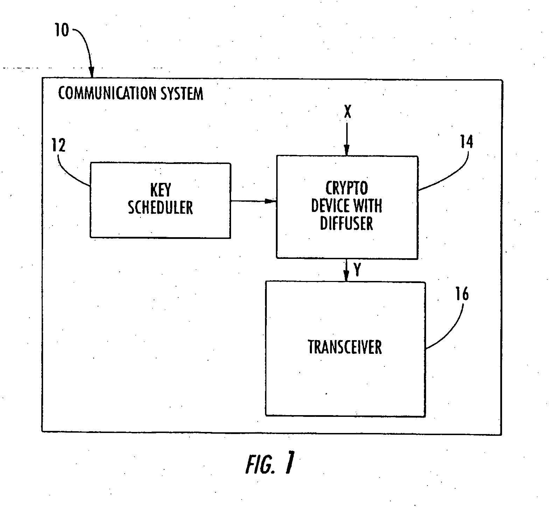

Referring initially to FIG. 1, a secure communication system **10** comprises a key scheduler **12,** a cryptographic device **14** and a transceiver **16.** The key scheduler **12** provides a key data block to the cryptographic device **14.** The cryptographic device **14** provides an output signal **Y** to the transceiver **16** based upon a received input data block **X** and the key data block from the key scheduler **12.** The key scheduler **12** and the cryptographic device **14** may be formed as separate units, or they may be part of an application specific integrated circuit (ASIC), for example.

The cryptographic device **14** executes an algorithm that has enhanced cryptographic strength so that it is suitable for secure communication systems. The algorithm may be a modified advanced encryption standard (AES) algorithm, for example.

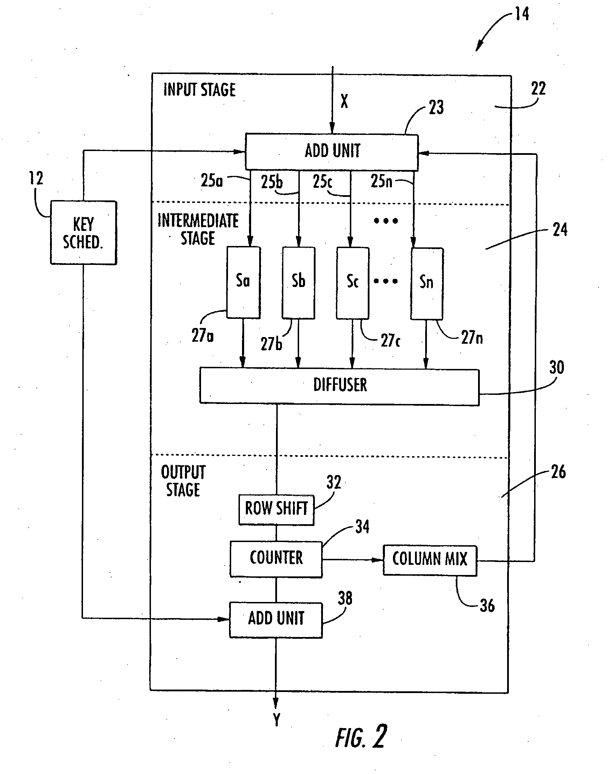

The algorithm in accordance with the present invention will now be discussed with reference to the cryptographic device **14** as shown in FIG. 1, and to a generalized flow diagram **15** as shown in FIG. 2. The cryptographic device **14** may comprise an input stage **22,** an intermediate stage **24** and an output stage **26.**

The input stage **22** receives the input data block **X** (Block **100),** and the key data block (Block **102)** from the key scheduler **12.** The key data block comprises a plurality of sub-key data blocks as readily understood by those skilled in the art. Each sub-key data block may be referred to as a round key. In the case of the AES algorithm, a 128 bit key data block, there are 10 sub-key data blocks, for a 192 bit key data block there are 12 sub-key data blocks, and for a 256 bit key data block there are 14 sub-key data blocks as shown in Block **102.**

In the input stage **22,** the input data block **X** and a first sub-key data block are added together using a modulo-two unit **23** (Block **104).** In accordance with the present invention, the output signal from the modulo-two unit **23** (Block **104)** is divided into a plurality of first signals **25a-25n.** For example, if the input data block **X** has a length of 128 bits, the output signal may be divided into 8 bit (1 byte) lengths resulting in n being equal to 16. The first signals may also be generally represented by reference **25.** Of course the size of the input data block **X** and the number n of first signals may vary depending on the intended application.

The intermediate stage **24** is connected to the input stage **22** and comprises a plurality of substitution units **27a-27n.** (Blocks **106a-106n)** The substitution units may also be generally represented by reference **27.** There is a respective substitution unit **27** for each first signal **25.** The intermediate stage **24** may also comprise a diffuser **30** (Block **108)** connected to the plurality of substitution units **27a-27n** for mixing data to generate a diffused signal. In the case of the AES algorithm, the plurality of substitution units **27a-27n** and the diffuser **30** add redundancy to the existing diffusion layers. In other words, if an attack is identified that eliminates the contribution of any of these operations, the overall cryptographic strength of the algorithm will not be compromised.

Using the AES algorithm as an example, the output stage **26** is connected to the intermediate stage **24** for repetitively looping back the diffused signal to the input stage **22** for combination with a next sub-key data block. However, before the diffused signal is looped back, it is passed through a row shift unit **32** (Block **110).** A counter **34** (Block **112)** counts how many times the repetitive loop has been performed. If another repetitive loop is to be performed, the signal from the row shift unit **32** is provided to a column mix unit **36** (Block **114).**

The signal from the column mix unit **36** is fed back to the modulo-two add unit **23** (Block **104),** wherein the looped back signal is added with a next sub-key data block. This repetitive looping back continues until the counter **34** reaches a predetermined count. When the predetermined count has been reached, the signal is then passed to another modulo-two add unit **38** so that a final sub-key data block can be added (Block **116)** to the output signal. The signal from the modulo-two add unit **38** provides the output signal for the cryptographic device **14** after the repetitively looping back is complete (Block **118).**

The modifications providing an enhanced cryptographic strength will now be discussed in greater detail. Instead of a single substitution unit, there are a plurality of substitution units **27a-27n.** The plurality of substitution units **27a-27n** substitute data within the plurality of first signals **25a-25n** which may be based upon random permutations or mathematical formulae.

Following the substitutions by the plurality of substitution units **27a-27n** may be a diffuser function. The diffuser function is chosen such that it cannot be specified over GF(2⁸) and runs relatively slow in software. A range of functions is possible so programmable or customer specific requirements can be satisfied. These customized functions can be retained as proprietary information to prevent proliferation of the resulting algorithm.

The substitution unit in the AES algorithm, for example, is based on a function that provides optimal security against linear and differential cryptanalysis. The issue is that it also allows an over-defined quadratic representation for the algorithm to be specified over GF(2⁸). This is a potential cryptographic vulnerability.

Rather than using the mapping specified in the AES standard, the plurality of substitution units **27a-27n** are comprised of programmable functions. Since there are 16 substitution units in the illustrated embodiment, the entropy preserving random permutations associated therewith eliminate the possibility of any mathematical model existing over a single field.

The following criteria should be addressed in providing a plurality of substitution units **27a-27n.** Meeting these criteria results in a mapping that should be secure against known linear and differential cryptanalysis: 1) each differential characteristic has a probability of at most 1/4, and a one-bit input difference will not lead to a one-bit output difference; 2) each linear characteristic has a probability in the range 1/2 ± 1/4, and a linear relation between one single bit in the input and one single bit in the output has a probability in the range 1/2 ± 1/8; and 3) the nonlinear order of the output bits as a function of the input bits is the maximum, namely 3. Simulations have shown that of the approximately 10⁵⁰⁰ possible mappings, in excess of 10⁴⁰⁰ of these will meet the above criteria.

The configuration of the diffuser **30** is governed primarily by the need to add computational complexity to the algorithm so that the speed of a software embedment is impacted. However, rather than use a cryptographically benign function, an operation that provides enhanced mixing to the algorithm is used.

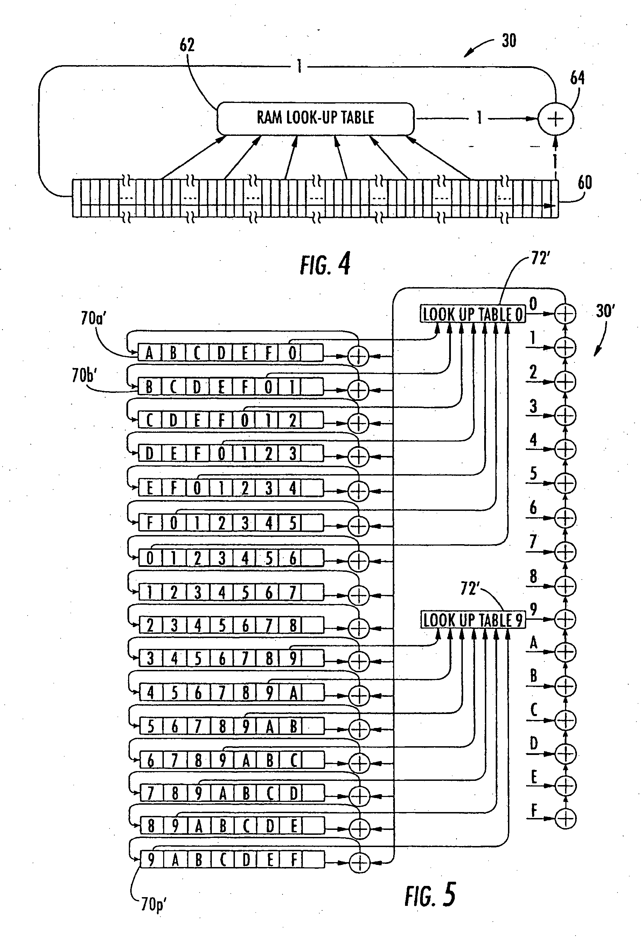

Of all of the possible embodiments for the diffuser **30,** three are discussed below with reference to FIGS. 4, 5 and 6. In one embodiment, the diffuser **30** comprises a shift register 60 and a look-up table **62.** The minimum number of cycles that the diffuser **30** circulates is enough to provide bit-wise mixing across the entire shift register. It is entropy preserving to eliminate the possibility of collisions occurring. The diffuser function is composed of a random mapping **62,** a shift register **60** and a modulo-two add unit **64.** The input variable is first entered into the shift register **60.** The register **60** is then shifted to the right one bit at a time until its contents have been completely re-circulated. With each shift, the least significant bit is modulo-two added to the output of the look-up table **62.** The result is moved into the most significant bit position of the register 60. When the contents of the register **60** have been completely processed, an output is generated.

The look-up table **62** is a custom non-linear function that maps at least 6 one-bit inputs to a single one-bit output. Each of the inputs is a tap connected to an individual bit position in the register **60.** The tap locations can be arbitrarily chosen with the constraint that no tap can be connected to either the least significant or to the most significant bit positions on the shift register **60.**

The look-up table **62** is a uniformly distributed mapping with the all zeros input location mapped to one and the all ones input location mapped to zero. This constraint prevents the diffuser **30** from locking up for certain values of the input. Note also that the processing time of power consumption of the function does not change depending on the structure of the input or output. It therefore preserves the security of the algorithm. Custom mapping designs can also be held as proprietary information to prevent proliferation of the resulting algorithm.

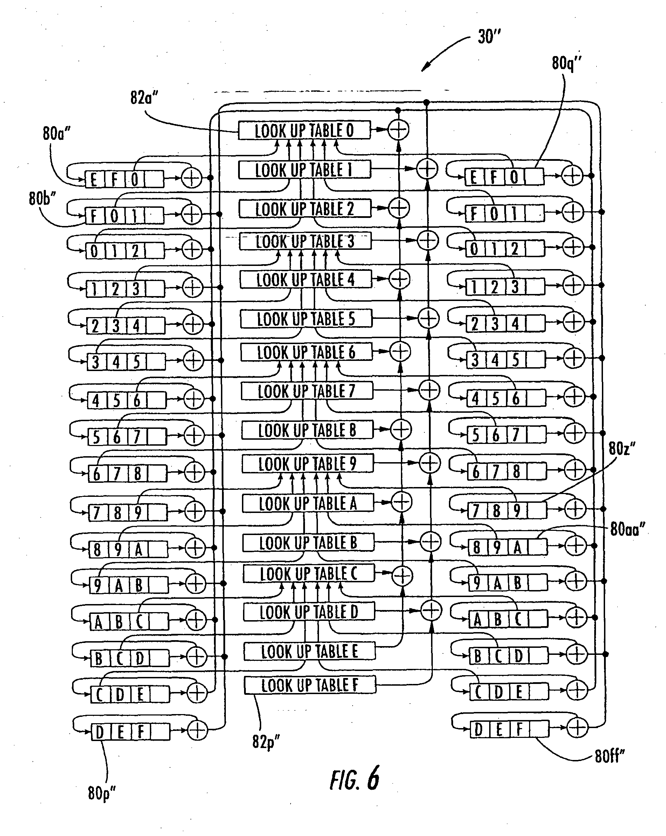

As examples, variations of the 1x128 diffuser **30** as shown in FIG. 4 will now be discussed with reference to FIGS. 5 and 6. These embodiments **30', 30"** provide similar statistical mixing performance, but are designed using parallel structures that execute faster in hardware than the 1x128 diffuser **30.**

FIG. 5 illustrates a diffuser **30'** constructed using a parallel array of 16 registers **70a'-70n'** and 16 look up tables **72a'-72n'** (two of which are only shown). Each register **70a'-70n'** is 8 bits wide. This design provides mixing over a full 128 bit block size. However, the mixing occurs on 8 bit segments of the input block in parallel. This allows a significant increase in the performance for a hardware embedment without creating a corresponding increase in speed for a software embedment. As with the previous design, each look-up table **72a'-72n'** is a uniformly distributed mapping with the all zeros input location mapped to one and the all ones input location mapped to zero.

FIG. 6 illustrates a diffuser **30"** constructed using a parallel array of 32 registers **80a"-80ff"** and 16 look up tables **82a"-82p".** Here, the mixing occurs on 4 bit segments of the input block in parallel and again, each look-up table **82a"-82p"** is a uniformly distributed mapping with the all zeros input location mapped to one and the all ones input location mapped to zero.

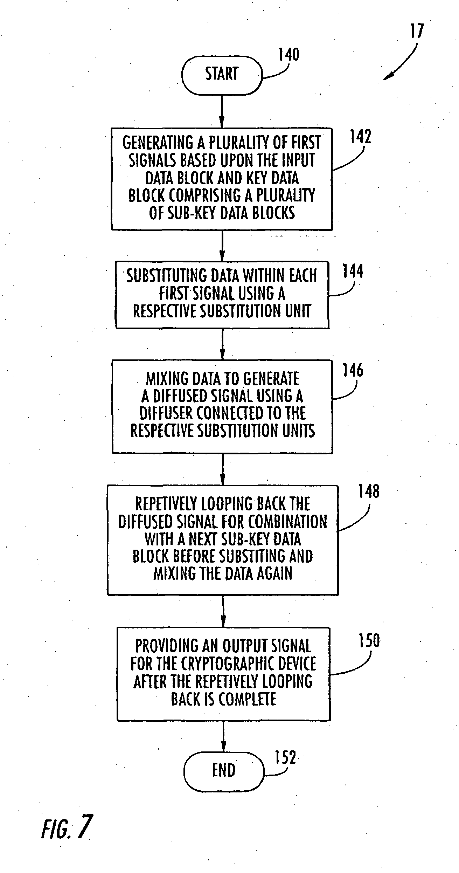

Yet another aspect of the present invention is directed to a method for converting an input data block **X** into an output signal **Y** for a cryptographic device **14.** Referring now to the flow diagram **17** in FIG. 7, from the start (Block **140),** the method comprises generating a plurality of first signals **25a-25n** based upon the input data block **X** and a key data block comprising a plurality of sub-key data blocks at Block **142.** Data is substituted within each first signal using a respective substitution unit **27** at Block **144.**

The method further comprises mixing data to generate a diffused signal using a diffuser **30** connected to the respective substitution units **27a-27n,** and repetitively looping back the diffused signal for combination with a next sub-key data block before repeating the substituting and mixing. The looping back is repeated a predetermined number of times, and the method further comprises providing the output signal for the cryptographic device **14** after the repetitively looping back is complete at Block **150.** The method ends at Block **152.**

## Claims

1. A cryptographic device (14) comprising:
an input stage (22) receiving an input data block and a key data block comprising a plurality of sub-key data blocks, and generating a plurality of first signals (25a - 25n) therefrom;
an intermediate stage (24) connected to said input stage (22) and comprising
a plurality of substitution units (27a - 27n), each substituting data within a respective first signal (25a - 25n), and
a diffuser (30) connected to said plurality of substitution units (27a - 27n) for mixing data to generate a diffused signal, wherein said diffuser (30) comprises a plurality of shift registers (60), a plurality of look-up tables (62) associated therewith and a plurality of modulo-two add units (64), said diffuser (30) adapted to shift data by each shift register (60) to the right one bit at a time until its contents have been completely re-circulated, with each shift modulo-two add by the modulo-two add unit (64) the least significant bit to the output of the look-up table (62) associated therewith, and to move the result into the most significant bit position of the shift register (60); and
an output stage (26) connected to said intermediate stage (24) for repetitively looping back the diffused signal to said input stage (22) for combination with a next sub-key data block.

2. A cryptographic device (14) according to Claim 1 wherein the looping back is repeated a predetermined number of times; and wherein said output stage (26) is adapted to provide an output signal for the cryptographic device (14) after the repetitively looping back is complete.

3. A cryptographic device (14) according to Claim 2 wherein the output signal is further combined with a final sub-key data block.

4. A cryptographic device (14) according to Claim 1 wherein each look-up table (62) is a uniformly distributed mapping with the all zeros input location mapped to one and the all ones input location mapped to zero.

5. A cryptographic device (14) according to Claim 1 wherein said output stage (26) comprises a counter for counting a number of times the diffused output signal is looped back to said input stage (22).

6. A method for converting an input data block into an output signal in a cryptographic device (14), the method comprising:
generating a plurality of first signals (25a-25n) based upon the input data block and a key data block comprising a plurality of sub-key data blocks;
substituting data within each first signal using a respective substitution unit (27a-27n);
mixing data to generate a diffused signal using a diffuser (30) connected to the respective substitution units (27a-27n), wherein said diffuser (30) comprises a plurality of shift registers (60), a plurality of look-up tables (62) associated therewith and plurality of modulo-two add units (64),
shifting data by each shift register (60) to the right one bit at a time until its contents have been completely re-circulated, with each shift modulo-two adding by the modulo-two add unit (64) the least significant bit to the output of the look-up table (62) associated therewith, and moving the result into the most significant bit position of the shift register (60); and
repetitively looping back the diffused signal for combination with a next sub-key data block before repeating the substituting and mixing.

7. A method according to Claim 6 wherein the looping back is repeated a predetermined number of times; and further comprising providing an output signal for the cryptographic device (14) after the repetitively looping back is complete.

8. A method according to Claim 7 further comprising combining the output signal with a final sub-key data block.

9. A method according to Claim 6 wherein each look-up table (62) is a uniformly distributed mapping with the all zeros input location mapped to one and the all ones input location mapped to zero.

10. A method according to Claim 6 further comprising counting a number of times the diffused output signal is looped back.

## Patentansprüche

1. Kryptographische Vorrichtung (14) mit:
- einer Eingangsstufe (22), die einen Eingangsdatenblock und einen eine Mehrzahl Teil-Schlüsseldatenblöcke umfassenden Schlüsseldatenblock empfängt und daraus eine Mehrzahl erster Signale (25a - 25n) generiert,
- einer Zwischenstufe (24), die mit der Eingangsstufe (22) verbunden ist und umfasst:
- eine Mehrzahl Substitutionseinheiten (27a - 27n), die jeweils Daten in einem jeweiligen ersten Signal (25a - 25n) substituieren, und
- einen mit der Mehrzahl Substitutionseinheiten (27a - 27n) verbundenen Diffuser (30) zum Mischen von Daten, um ein diffundiertes Signal zu generieren, wobei der Diffuser (30) eine Mehrzahl Schieberegister (60), eine Mehrzahl diesen zugeordneter Nachschlagetabellen (62) und eine Mehrzahl Modulo-Zwei-Additionseinheiten (64) umfasst, wobei der Diffuser (30) dazu eingerichtet ist, durch jedes Schieberegister (60) Daten jeweils ein Bit nach rechts zu verschieben bis dessen Inhalt komplett rezirkuliert worden ist, bei jeder Verschiebung durch die Modulo-Zwei-Additionseinheit (64) eine Modulo-Zwei-Addition des am wenigsten signifikanten Bits mit dem Ausgang der diesem zugeordneten Nachschlagetabelle (62) auszuführen, und das Ergebnis zur signifikantesten Bitposition des Schieberegisters (60) zu bewegen, und
- einer mit der Zwischenstufe (24) verbundenen Ausgangsstufe (26) zum wiederholten Zurückschleifen des diffundierten Signals zur Eingangsstufe (22) zur Kombination mit einem nächsten Teil-Schlüsseldatenblock.

2. Kryptographische Vorrichtung (14) nach Anspruch 1, wobei das Zurückschleifen eine vorgegebene Anzahl von Malen wiederholt wird, und wobei die Ausgangsstufe (26) dazu eingerichtet ist, ein Ausgangssignal für die kryptographische Vorrichtung (14) bereitzustellen, nachdem das wiederholte Zurückschleifen abgeschlossen ist.

3. Kryptographische Vorrichtung (14) nach Anspruch 2, wobei das Ausgangssignal ferner mit einem letzten Teil-Schlüsseldatenblock kombiniert wird.

4. Kryptographische Vorrichtung (14) nach Anspruch 1, wobei jede Nachschlagetabelle (62) eine gleichmäßig verteilte Abbildung ist, wobei die nur Nullen umfassende Eingangsstelle auf eins abgebildet und die nur Einsen umfassende Eingangsstelle auf null abgebildet ist.

5. Kryptographische Vorrichtung (14) nach Anspruch 1, wobei die Ausgangsstufe (26) einen Zähler zum Zählen der Anzahl der Male umfasst, die das diffundierte Ausgangssignal zur Eingangsstufe (22) zurückgeschleift wird.

6. Verfahren zum Umsetzen eines Eingangsdatenblocks in ein Ausgangssignal in einer kryptographischen Vorrichtung (14), wobei das Verfahren umfasst:
- Generieren einer Mehrzahl erster Signale (25a - 25n) basierend auf dem Eingangsdatenblock und einem eine Mehrzahl Teil-Schlüsseldatenblöcke umfassenden Schlüsseldatenblock,
- Substituieren von Daten in jedem ersten Signal unter Verwendung einer jeweiligen Substitutionseinheit (27a - 27n),
- Mischen von Daten, um unter Verwendung eines mit den jeweiligen Substitutionseinheiten (27a - 27n) verbundenen Diffusers (30) ein diffundiertes Signal zu generieren, wobei der Diffuser (30) eine Mehrzahl Schieberegister (60), eine Mehrzahl diesen zugeordneter Nachschlagetabellen (62) und eine Mehrzahl Modulo-Zwei-Additionseinheiten (64) umfasst,
- Verschieben von Daten durch jedes Schieberegister (60) jeweils ein Bit nach rechts bis dessen Inhalt komplett rezirkuliert worden ist, bei jeder Verschiebung Ausführen einer Modulo-Zwei-Addition des am wenigsten signifikanten Bits mit dem Ausgang der diesem zugeordneten Nachschlagetabelle (62) durch die Modulo-Zwei-Additionseinheit (64), und Bewegen des Ergebnisses zur signifikantesten Bitposition des Schieberegisters (60), und
- wiederholtes Zurückschleifen des diffundierten Signals zur Kombination mit einem nächsten Teil-Schlüsseldatenblock, bevor das Substituieren und Mischen wiederholt wird.

7. Verfahren nach Anspruch 6, wobei das Zurückschleifen eine vorgegebene Anzahl von Malen wiederholt wird, und das ferner das Bereitstellen eines Ausgangssignals für die kryptographische Vorrichtung (14) umfasst, nachdem das wiederholte Zurückschleifen abgeschlossen ist.

8. Verfahren nach Anspruch 7, das ferner das Kombinieren des Ausgangssignals mit einem letzten Teil-Schlüsseldatenblock umfasst.

9. Verfahren nach Anspruch 6, wobei jede Nachschlagetabelle (62) eine gleichmäßig verteilte Abbildung ist, wobei die nur Nullen umfassende Eingangsstelle auf eins abgebildet und die nur Einsen umfassende Eingangsstelle auf null abgebildet ist.

10. Verfahren nach Anspruch 6, das ferner das Zählen der Anzahl der Male umfasst, die das diffundierte Ausgangssignal zurückgeschleift wird.

## Revendications

1. Dispositif cryptographique (14) comprenant :
un étage d'entrée (22) recevant un bloc de données d'entrée et un bloc de données de clé comprenant une pluralité de blocs de données de sous-clé, et générant une pluralité de premiers signaux (25a-25n) à partir de ceux-ci ;
un étage intermédiaire (24) connecté audit étage d'entrée (22) et comprenant
une pluralité d'unités de substitution (27a-27n), chacune substituant des données au sein d'un premier signal (25a-25n) respectif, et
un diffuseur (30) connecté à ladite pluralité d'unités de substitution (27a-27n) pour mélanger des données pour générer un signal diffusé, dans lequel ledit diffuseur (30) comprend une pluralité de registres de décalage (60), une pluralité de tables de recherche (62) associées avec ceux-ci et une pluralité d'unités d'addition (64) modulo deux, ledit diffuseur (30) adapté à décaler des données par chaque registre de décalage (60) vers la droite un bit à la fois jusqu'à ce que son contenu ait été complètement recirculé, avec chaque décalage ajoutant modulo deux par l'unité d'addition (64) modulo deux le bit le moins significatif à la sortie de la table de recherche (62) associée avec celle-ci, et à déplacer le résultat dans la position de bit le plus significatif du registre de décalage (60) ; et
un étage de sortie (26) connecté audit étage intermédiaire (24) pour renvoyer de façon répétitive en boucle le signal diffusé audit étage d'entrée (22) pour une combinaison avec un bloc suivant de données de sous-clé.

2. Dispositif cryptographique (14) selon la revendication 1, dans lequel le renvoi en boucle est répété un nombre prédéterminé de fois ; et dans lequel ledit étage de sortie (26) est adapté à délivrer un signal de sortie pour le dispositif cryptographique (14) lorsque le renvoi répétitif en boucle est terminé.

3. Dispositif cryptographique (14) selon la revendication 2, dans lequel le signal de sortie est en outre combiné avec un bloc final de données de sous-clé.

4. Dispositif cryptographique (14) selon la revendication 1, dans lequel chaque table de recherche (62) est un mappage uniformément distribué avec la localisation d'entrée zéro partout mappée sur un et la localisation d'entrée un partout mappée sur zéro.

5. Dispositif cryptographique (14) selon la revendication 1, dans lequel ledit étage de sortie (26) comprend un compteur pour compter un nombre de fois où le signal de sortie diffusé est renvoyé en boucle audit étage d'entrée (22).

6. Procédé de conversion d'un bloc de données d'entrée en un signal de sortie dans un dispositif cryptographique (14), le procédé comprenant :
la génération d'une pluralité de premiers signaux (25a-25n) sur la base du bloc de données d'entrée et d'un bloc de données de clé comprenant une pluralité de blocs de données de sous-clé ;
la substitution de données au sein de chaque premier signal en utilisant une unité de substitution (27a-27n) respective ;
le mélange de données pour générer un signal diffusé en utilisant un diffuseur (30) connecté aux unités de substitution (27a-27n) respectives, dans lequel ledit diffuseur (30) comprend une pluralité de registres de décalage (60), une pluralité de tables de recherche (62) associées avec ceux-ci et une pluralité d'unités d'addition (64) modulo deux,
le décalage de données par chaque registre de décalage (60) vers la droite un bit à la fois jusqu'à ce que son contenu ait été complètement recirculé, avec chaque décalage ajoutant modulo deux par l'unité d'addition (64) modulo deux le bit le moins significatif à la sortie de la table de recherche (62) associée avec celle-ci, et le déplacement du résultat dans la position de bit le plus significatif du registre de décalage (60) ; et
le renvoi répétitif en boucle du signal diffusé pour une combinaison avec un bloc suivant de données de sous-clé avant répétition de la substitution et mélange.

7. Procédé selon la revendication 6, dans lequel le renvoi en boucle est répété un nombre prédéterminé de fois ; et comprenant en outre la délivrance d'un signal de sortie pour le dispositif cryptographique (14) lorsque le renvoi répétitif en boucle est terminé.

8. Procédé selon la revendication 7, comprenant en outre la combinaison du signal de sortie avec un bloc final de données de sous-clé.

9. Procédé selon la revendication 6, dans lequel chaque table de recherche (62) est un mappage uniformément distribué avec la localisation d'entrée zéro partout mappée sur un et la localisation d'entrée un partout mappée sur zéro.

10. Procédé selon la revendication 6, comprenant en outre le comptage d'un nombre de fois où le signal de sortie diffusé est renvoyé en boucle.
